# EUROPÄISCHE PATENTSCHRIFT

(11) **EP 0 341 464 B1**
(45) Veröffentlichungstag und Bekanntmachung des Hinweises auf die Patenterteilung: **21.09.1994**
(21) Anmeldenummer: 89107177.1
(22) Anmeldetag: 21.04.1989
(51) Int. Cl.: H01H 35/14, H01H 36/00

(54) **Beschleunigungs- oder Verzögerungs-Sensor**
Acceleration- or deceleration sensor
Senseur d'accélération ou de décélération

(30) Priorität: 11.05.1988 DE 8806240 U
(43) Veröffentlichungstag der Anmeldung: 15.11.1989
(73) Patentinhaber: W. Günther GmbH, D-90431 Nürnberg (DE)
(72) Erfinder: Bachmann, Rolf, D-8500 Nürnberg 10 (DE)
(74) Vertreter: Tergau, Enno, Dipl.-Ing.

(56) Entgegenhaltungen:
- DE-U- 8 806 240
- US-A- 2 976 378
- US-A- 3 459 911
- US-A- 4 409 577

## Beschreibung

Die Erfindung betrifft einen Beschleunigungs- oder Verzögerungs-Sensor mit einem Gehäuse, das mehrere zueinander parallele tunnel-förmige Ausnehmungen aufweist, wobei in wenigstens einer Ausnehmung ein Reed-Schalter und in wenigstens einer anderen Ausnehmung zwei stabförmige Dauermagnete in Richtung ihrer Längsachsen hintereinander angeordnet sind. Die Anordnung der Dauermagnete ist dabei derart, daß sich zwei gleichnamige Pole der Dauermagnete gegenüberliegen, wobei wenigstens einer der Dauermagnete in Längsrichtung verschiebbar ist Der oder die Reed-Schalter sind dabei so angeordnet, daß sie bei Verschiebung des verschieblichen Dauermagneten von dessen Magnetfeld betätigt werden.

Derartige Sensoren gemäß dem Oberbegriff des Anspruchs 1 mit allerdings nur einem Reed-Schalter und nur einer tunnel-förmigen Ausnehmung mit darin angeordneten beweglichen Dauermagneten sind beispielsweise aus der deutschen Patentschrift 33 38 287 bekannt. Sie werden u.a. in Sicherheitseinrichtungen für Kraftfahrzeuge verwendet. Solche Sicherheitseinrichtungen können beispielsweise aus einem mit Preßluft oder einem anderen Gas aufblasbaren Sack bestehen, der im Bereich des Lenkrades angeordnet ist und der im Falle eines Auffahrunfalles plötzlich aufgeblasen wird und dadurch das Aufprallen des Fahrers auf das Lenkrad verhindert. Die zum Aufblasen des Sackes erforderliche Preßluft wird in einer Preßluftflasche mitgeführt, die normalerweise mittels eines Magnetventiles abgeschlossen ist. Im Falle eines Auffahrunfalles wird das Magnetventil geöffnet und der Weg für die Preßluft freigegeben, so daß diese aus der Vorratsflasche in den erwähnten Sack fließen kann. Das Magnetventil kann dabei mit dem hier vorgeschlagenen Sensor betätigt, also geöffnet werden Der Senso kann dazu beispielsweise ein Auslösesystem, z.B. eine Thyristor-Zündung oder auch eine andere Auslöseelektronik unmittelbar schalten.

Das erwähnte Anwendungsgebiet für solche Sensoren ist nur als Beispiel genannt. Andere Anwendungsgebiete sind ebenfalls bekannt, beispielsweise Beschleunigungsmesser für Zentrifugen und ähnliches.

Sensoren der beschriebenen Art werden in großer Stückzahl benötigt. Dabei wird vorausgesetzt, daß die Sensoren selbst einen möglichst kleinen Raum einnehmen und daß ihr Ansprechverhalten nur in engen Grenzen schwankt. Außerdem wird erwartet, daß der Ansprechbereich, also die Beschleunigung bzw. Verzögerung, bei der der Reed-Schalter geschlossen wird, je nach Anforderungen einstellbar ist, wobei naturgemäß der eingestellte Wert möglichst genau eingehalten werden soll. Die Forderungen sind mit den herkömmlichen Konstruktionen nur schwierig einzuhalten. Man behilft sich beispielsweise dadurch, daß eine größere Stückzahl von Sensoren gefertigt, diese ausgemessen und entsprechend den Meßresultaten ausgesucht werden.

Der Erfindung liegt die Aufgabe zugrunde, die vorbekannten Beschleunigungs- oder Verzögerungs-Sensoren weiterzuentwickeln, so daß eine genauere und wirtschaftlichere Fertigung möglich ist, wobei dann auch die Streuung der eingestellten Ansprechwerte geringer sein soll.

Zur Lösung dieser Aufgabe wird von den bekannten Sensoren mit einem Gehäuse ausgegangen, das mehrere, beispielsweise zwei zueinander parallele tunnel-förmige Ausnehmungen aufweist, wobei in einer Ausnehmung ein Reed-Schalter und in der anderen Ausnehmung zwei stabförmige Dauermagnete in der geschilderten Weise untergebracht sind (DE-PS 33 38 287) Die Lösung besteht in der Kombination der folgenden Merkmale:
- Die Ausnehmungen für die Aufnahme der Reed-Schalter sind jeweils mit einem Deckel ausgerüstet, der quer zur Längsachse der Ausnehmung abnehmbar ist;
- die Ausnehmungen für die Aufnahme der verschiebbaren Dauermagnete sind an ihrer außenliegenden Stirnseite mit je einer Justierschraube verschlossen.

Die vorgeschlagenen Merkmale bringen folgende Vorteile mit sich:
Durch den Deckel, der normalerweise die Ausnehmung für die Aufnahme des oder der Reed-Schalter verschließt, ist der Reed-Schalter bei der Montage der Sensoren leicht von außen einsetzbar. Dabei ist die Lage des Reed-Schalters in engen Grenzen einstellbar und das Gehäuse ist infolge seiner neuartigen Konstruktion in Montageautomaten zu verarbeiten. Nach dem Einsetzen des Reed-Schalters wird der Deckel aufgesetzt, wodurch der Reed-Schalter in seiner Position unverrückbar festgehalten wird. Durch die ebenfalls vorgesehene Justierschraube kann nun der verschiebbare Dauermagnet in seine optimale Ausgangslage gebracht werden, wodurch seine Relativlage zum Reed-Schalter genau einstellbar ist. Diese Justierung kann durch einfaches Drehen der erwähnten Schraube von der Stirnseite her durchgeführt werden. Ist der bewegliche Magnet in eine optimale Ausgangsstellung gebracht, so wird die Justierschraube arretiert, was z.B. durch Hartwachs, Lack, ein Harz o.dgl. geschehen kann.

Der vorgeschlagene Beschleunigungs- oder Verzögerungs-Sensor kann grundsätzlich so aufgebaut sein, daß er nur einen Reed-Schalter und einen beweglichen Stabmagneten in zueinander parallelen tunnel-förmigen Ausnehmungen aufweist. Diese Normal-Konstruktion reicht grundsätzlich aus, um den erforderlichen Schaltvorgang durchzuführen. In manchen Fällen ist es aber erwünscht, beispielsweise aus Redundanz-Gründen mehrere voneinander unabhängige Reed-Schalter gleichzeitig zu schalten. Aus den gleichen Gründen kann es erwünscht sein, auch mehrere bewegliche Dauermagnete zur Verfügung zu haben. In diesen Fällen kannn das Gehäuse mit doppelter oder gar mehrfacher Bestückung hergestellt werden, wobei die Anordnung so getroffen sein kann, daß mehrere Reed-Schalter durch einen einzigen Dauermagneten beeinflußt und geschaltet werden. Auch ist es möglich, zur Erhöhung der Sicherheit mehrere Dauermagneten in unterschiedlichen Ausnehmungen unterzubringen, die auf denselben Reed-Schalter oder auf dieselbe Gruppe von Reed-Schaltern einwirken

Besonders vorteilhaft ist es, wenn der Deckel, der sich über den Ausnehmungen für den oder die Reed-Schalter befindet, als Klappdeckel ausgeführt ist, der über ein oder mehrere Filmscharniere mit dem Gehäuse verbunden ist. Auf diese Weise kann das gesamte Gehäuse samt Klappdeckel als ein einziges Spritzgußteil hergestellt werden, was sowohl die Kosten wie auch die Toleranzgrenzen für Abmessungsabweichungen verringert. Als Werkstoff für die Herstellung derartiger Gehäuse kommen zähe und vorzugsweise schlagfeste organische Polymerisate in Betracht, beispielsweise Polyamide, insbesondere glasfaserverstärkte Polyamide.

In weiterer Ausgestaltung der Erfindung wird vorgeschlagen, daß die Ausnehmung für die Aufnahme der Dauermagnete durch eine Verengung in zwei hintereinanderliegende Teilräume unterteilt wird, in deren jedem einer der beiden Dauermagnete angeordnet ist.

Durch eine derartige Verengung, die leicht bei der Herstellung des Gehäuses nach dem Spritzgußverfahren mit eingezogen werden kann, wird erreicht, daß der festliegende Dauermagnet, der als Bremsmagnet wirkt, leicht an seine vorgesehen Stelle gesetzt werden kann, ohne daß Abweichungen in der Lage eintreten. Der bewegliche Dauermagnet kommt dann in den verbleibenden, meist größeren Teilraum, in welchem er sich ungehindert bewegen kann.

Besonders vorteilhaft ist es, wenn die Verengung eine Zwischenwand ist. In diesem Fall ist es möglich, den Teilraum für den beweglichen Dauermagneten mit einer Dämpfungsflüssigkeit zu füllen, wodurch ein zusätzliches Mittel zur Verfügung steht, das Bewegungsverhalten dieses Magneten und damit das Schaltverhalten des gesamten Sensors zu beeinflussen. Um die Wirkung der Dämpfungsflüssigkeit auszunützen, wird vorgeschlagen, daß zwischen der Mantelfläche des verschiebbaren Dauermagneten und der Innenfläche des ihn aufnehmenden Teilraumes ein Spalt für den Durchtritt der Dämpfungsflüssigkeit vorhanden ist. Wirkt eine Verzögerung oder Beschleunigung hinreichender Größe auf den Sensor ein, so wird der bewegliche Dauermagnet aufgrund seiner Trägheit verschoben. Je nach Größe des erwähnten Spaltes sowie auch je nach Viskosität der Dämpfungsflüssigkeit bewegt sich der Dauermagnet dabei in Richtung der Längsachse des ihm zugeordneten Teilraumes. Die Bewegung des Dauermagneten hat eine Verschiebung des an ihn gekoppelten Feldes zur Folge, welches Feld letztendlich auf den Reed-Schalter einwirkt und diesen durchschaltet. Zur genaueren Einstellung der Dämpfungswirkung wird des weiteren vorgeschlagen, den Dauermagneten an seiner Oberfläche zu glätten oder zu polieren. Auch der Grad der Glättung bzw. Politur kann mit ins Kalkül gezogen werden, um die Dämpfungswirkung auf einen gewünschten Wert einzustellen.

Die Erfindung wird im folgenden anhand der beigefügten Zeichnung näher erläutert. Es stellen dar:
- Fig. 1: einen schematischen Längsschnitt durch eine Ausführungsform des Sensors;
- Fig. 2: einen Querschnitt durch den Sensor gemäß Fig. 1 mit geschlossenem Deckel;
- Fig. 3: einen Querschnitt durch Fig. 1 mit teilweise geöffnetem Deckel;
- Fig. 4: einen Querschnitt durch einen anderen Sensor mit mehreren Magnet- und Reed-Schalter-Räumen.

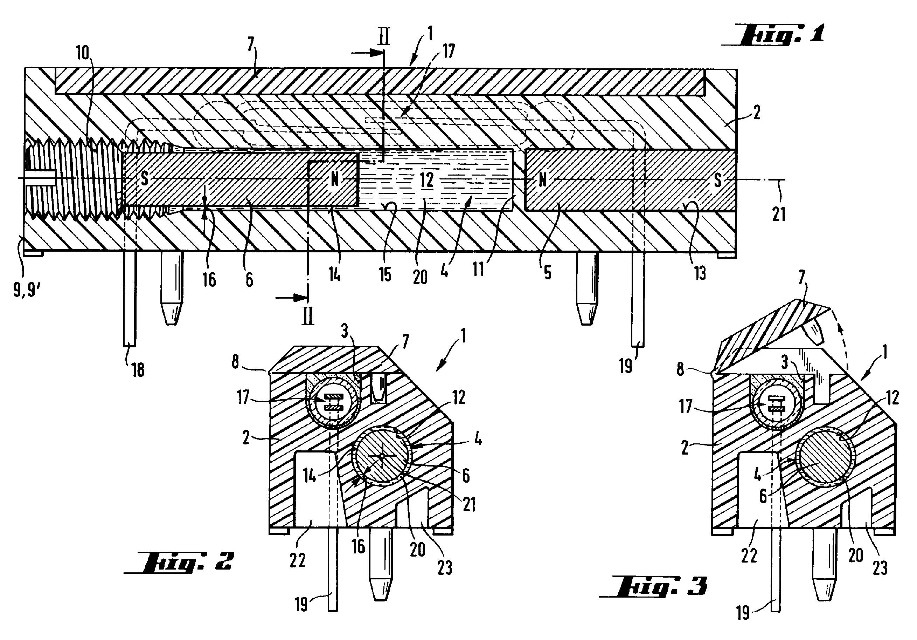

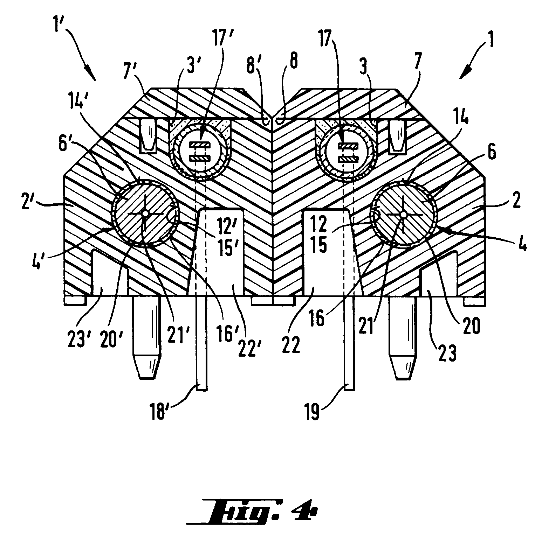

Der in den Zeichnungen nach Fig. 1 bis 3 dargestellte Beschleunigungs- oder Verzögerungs-Sensor ist als Ganzes mit (1) bezeichnet. Er besteht aus dem Gehäuse (2), welches zwei zueinander parallele tunnelförmige Ausnehmungen (3 und 4) aufweist. Die in den Fig. 2 und 3 im Querschnitt dargestellten Ausführungsformen weisen unten jeweils zwei zueinander parallele Material-Ausnehmungen (22,23) auf; bei der Ausführungsform gemäß Fig. 4 sind deren insgesamt vier vorhanden.

In der Ausnehmung (3) befindet sich im fertig montierten Zustand ein Reed-Schalter (17) mit Anschlußfahnen (18,19) und in der Ausnehmung (4) befinden sich im fertig montierten Zustand zwei stabförmige Dauermagnete (5 und 6). Der Dauermagnet (5) ist dabei als fester, nicht verschiebbarer Dauermagnet ausgebildet; der Dauermagnet (6) ist beim dargestellten Ausführungsbeispiel verschiebbar. Die Dauermagnete sind so angeordnet, daß sich zwei gleichnamige Pole gegenüberliegen, beispielsweise die N-Pole. Die Gesamtanordnung ist so getroffen, daß der Reed-Schalter bei Verschiebung des Dauermagneten (6) von dessen Mangnetfeld betätigt wird.

Die Ausnehmung (3), die der Aufnahme des Reed-Schalters dient, ist erfindungsgemäß mit einem Deckel (7) ausgerüstet, der quer zur Längsachse der Ausnehmung (3) öffenbar ist. Bei der in der Zeichnung dargestellten bevorzugten Ausführungsform ist der Deckel (7) als Klappdeckel ausgebildet, der über Filmscharniere (8) mit dem Gehäuse (2) unverlierbar verbunden ist. Je nach Größe des Gehäuses bzw. Deckels und je nach verwendetem Werkstoff kann es vorteilhaft sein, ein einziges Filmscharnier (8) anzuordnen, welches über die gesamte Länge des Deckels durchgehend ausgeführt ist; oder es kann vorteilhaft sein, mehrere kleinere Filmscharniere hintereinander anzuordnen.

Die Ausnehmung (4) für die Aufnahme des verschiebbaren Dauermagneten (6) ist erfindungsgemäß an ihrer außenliegenden Stirnseite (9) mit einer Justierschraube (10) verschlossen. Bei dem in Fig. 1 dargestellten bevorzugten Ausführungsbeispiel ist die Ausnehmung (4), welche der Aufnahme der Dauermagnete (5 und 6) dient, durch eine Verengung, vorzugsweise durch eine Zwischenwand (11), in zwei hintereinanderliegende Teilräume (12 und 13) unterteilt. In jedem dieser Teilräume ist je einer der beiden Dauermagnete (6 und 5) angeordnet.

Die Unterteilung der Ausnehmung (4) in die beiden Teilräume (12 und 13) hat verschiedenen Vorteile. Sie gestattet es zum einen, den Raum (13), der der Aufnahme des festen Dauermagneten (5) dient, so zu bemessen, daß dieser Raum genau mit dem Volumen bzw. den Abmessungen des Dauermagneten (5) übereinstimmt. Dadurch ist die Lage dieses Dauermagneten fixiert, was für die Genauigkeit der Ansprechwerte von großer Bedeutung ist. Die Unterteilung gestattet es des weiteren, den Raum (12) mit einer Dämpfungsflüssigkeit (20) zu füllen, wodurch eine weitere Möglichkeit besteht, das Bewegungsverhalten des Magneten (6) und damit das Schaltverhalten des Sensors zu beeinflussen. In diesem Falle ist es allerdings erforderlich, einen etwas dünneren Dauermagneten zu benutzen oder - alternativ dazu - den Innendurchmesser des Teilraumes (12) etwas größer zu wählen. In jedem Fall muß zwischen der Mantelfläche (14) des verschiebbaren Dauermagneten (6) und der Innenfläche (15) ein Spalt (16) für den Durchtritt der Dämpfungsflüssigkeit (20) vorhanden sein. Bewegt sich der Dauermagnet (6) bei Auftreten eines Beschleunigungs- oder Verzögerungs-Momentes in Richtung der Längsachse (21) des Teilraumes (12), so strömt die Dämpfungsflüssigkeit durch den Spalt (16), was nur verhältnismäßig langsam möglich ist, so daß dadurch eine Bremsung des Dauermagneten (6) zustande kommt. Die langsamere Bewegung dieses Dauermagneten verzögert das Ansprechen des Sensors.

Als Dämpfungsflüssigkeit (20) kommen in erster Linie Silikonöle in Betracht, die je nach der gewünschten Viskosität ausgesucht werden können. Silikonöle haben vor anderen Flüssigkeiten, beispielsweise Paraffinen, den Vorteil, daß sie einen relativ geringen Temperaturkoeffizienten der Viskosität aufweisen, so daß mit Silikonöl gefüllte Sensoren bei Temperaturen von etwa -40°C bis +160°C eingesetzt werden können.

Im Hinblick auf den Temperaturbereich, in welchem die Sensoren eingesetzt werden sollen, müssen auch die hier in Betracht kommenden Magnetwerkstoffe ausgesucht werden. Wesentlich ist, daß die Magnetwerkstoffe einen verhältnismäßig geringen Temperaturkoeffizient der Koerzitivkraft aufweisen; auf die Höhe der Koerzitivkraft selbst kommt es nicht so sehr an, da die einzusetzenden Reed-Schalter schon auf verhältnismäßig schwache Magnetfelder reagieren. Im Hinblick auf diese Verhältnisse haben sich AlNiCo-Magnete bei entsprechend durchgeführten Versuchen am besten bewährt.

In Fig. 4 sind zwei Sensoren (1 und 1′) Rücken an Rücken parallel zueinander angeordnet. Die Konstruktion erlaubt ein Öffnen der jeweiligen (7,7′) um die Scharniere (8,8′) und damit die Zugängigkeit zu den Reed-Schaltern (17,17′) bzw. zu den Reed-Schalter-Räumen (3 und 3′).

### Bezugszeichenliste

- 1: Sensor
- 2: Gehäuse
- 3: Ausnehmung
- 4: Ausnehmung
- 5: fester Dauermagnet
- 6: verschiebbarer Dauermagnet
- 7: Deckel
- 8: Filmscharnier
- 9: Stirnseite
- 10: Justierschraube
- 11: Verengung
- 12: Teilraum von 4
- 13: Teilraum von 4
- 14: Mantelfläche von 6
- 15: Innenfläche von 12
- 16: Spalt
- 17: Reed-Schalter
- 18: Anschlußfahne
- 19: Anschlußfahne
- 20: Dämpfungsflüssigkeit
- 21: Längsachse
- 22: Material-Ausnehmung
- 23: Material-Ausnehmung

## Patentansprüche

1. Beschleunigungs- oder Verzögerungs-Sensor (1,1′) mit einem Gehäuse, das mehrere zueinander parallele tunnelförmige Ausnehmungen (3,3′,4,4′) aufweist, wobei in wenigstens einer Ausnehmung ein Reed-Schalter (17,17′) und in wenigstens einer anderen Ausnehmung zwei stabförmige Dauermagnete (5,5′,6,6′) in Richtung ihrer Längsachsen hintereinander angeordnet sind, wobei
- sich zwei gleichnamige Pole der Dauermagnete gegenüberliegen,
- wenigstens einer der Dauermagnete (6,6′) in Längsrichtung verschiebbar ist und
- der oder die Reed-Schalter (17,17′) bei Verschiebung des oder der Dauermagnete von deren Magnetfeld betätigt werden,
gekennzeichnet durch folgende Merkmale:
- Die Ausnehmungen (3,3′) für die Aufnahme der Reed-Schalter sind jeweils mit einem Deckel (7,7′) ausgerüstet, der quer zur Längsachse (21) der Ausnehmung (3,3′) abnehmbar bzw. öffenbar ist;
- die Ausnehmungen (4,4′) für die Aufnahme der verschiebbaren Dauermagnete (6,6′) sind an ihrer außenliegenden Stirnseite (9,9′) mit einer Justierschraube (10,10′) verschlossen.

2. Sensor nach Anspruch 1,
dadurch gekennzeichnet,
daß der Deckel (7) ein Klappdeckel ist, der über ein oder mehrere Filmscharniere (8) mit dem Gehäuse (2) verbunden ist.

3. Sensor nach Anspruch 1 oder 2,
dadurch gekennzeichnet,
daß die Ausnehmung (4) für die Aufnahme der Dauermagnete (5,6) durch eine Verengung (11) in zwei hintereinanderliegende Teilräume (12,13) unterteilt ist, in deren jedem einer der beiden Dauermagnete (5,6) angeordnet ist.

4. Sensor nach Anspruch 3,
dadurch gekennzeichnet,
daß die Verengung (11) eine Zwischenwand ist.

5. Sensor nach Anspruch 3 oder 4,
dadurch gekennzeichnet,
daß der Teilraum (12) für die Aufnahme des verschiebbaren Magneten (6) mit einer Dämpfungsflüssigkeit (20) gefüllt ist und daß zwischen der Mantelfläche (14) des verschiebbaren Dauermagneten (6) und der Innenfläche (15) des Teilraumes (12) ein Spalt (16) für den Durchtritt der Dämpfungsflüssigkeit (20) vorhanden ist.

6. Sensor nach Anspruch 3,4 oder 5,
dadurch gekennzeichnet,
daß die Oberfläche (14) des verschiebbaren Dauermagneten (6) geglättet oder poliert ist.

7. Sensor nach einem der vorausgehenden Ansprüche,
dadurch gekennzeichnet,
daß mehr als zwei zueinander parallele Ausnehmungen (3) für mehr als einen Reed-Schalter (17) sowie gegebenenfalls auch für mehr als zwei Dauermagnetpaare (5,6) in einem einzigen Gehäuse (2) angeordnet sind.

## Claims

1. An acceleration or deceleration sensor (1, 1′) with a housing that has several tunnel-shaped cavities (3, 3′, 4, 4′) parallel to each other, in which arrangement there are arranged in at least one cavity, a reed switch (17, 17′) and in at least one other cavity two bar-shaped permanent magnets (5, 5′, 6, 6′) one after the other in the direction of their longitudinal axes, in which arrangement
- two like poles of the permanent magnets lie opposite each other,
- at least one of the permanent magnets (6, 6′) is displaceable in the longitudinal direction and
- the reed switch or switches (17, 17′) are actuated on displacement of the permanent magnet or magnets by their magnetic field,
characterized by the following features:
- the cavities (3, 3′) for accommodating the reed switches are respectively provided with a lid (7, 7′) which can be removed or opened transversely to the longitudinal axis (21) of the cavity (3, 3′);
- the cavities (4, 4′) for receiving the displaceable permanent magnets (6, 6′) are closed at their outer end side (9, 9′) by a setscrew (10, 10′).

2. A sensor according to claim 1,
characterized in that
the lid (7) is a hinged lid that is joined to the housing (2) by one or more film hinges (8).

3. A sensor according to claim 1 or 2,
characterized in that
the cavity (4) for receiving the permanent magnets (5, 6) is subdivided by a constriction (11) into two subchambers (12, 13) disposed one after the other, in each of which there is arranged one of the two permanent magnets (5, 6).

4. A sensor according to claim 3,
characterized in that
the constriction (11) is a partition.

5. A sensor according to claim 3 or 4,
characterized in that
the subchamber (12) for receiving the displaceable magnet (6) is filled by a damping fluid (20), and that a gap (16) is provided between the lateral surface (14) of the displaceable permanent magnet (6) and the inner surface (15) of the subchamber (12) for the passing of the damping fluid (20).

6. A sensor according to claim 3, 4 or 5,
characterized in that
the surface (14) of the permanent magnet (6) is smoothed or polished.

7. A sensor according to one of the preceding claims,
characterized in that
there are arranged more than two cavities (3) parallel to each other for more than one reed switch (17), as well as for more than two permanent magnets (5, 6) if required, in a single housing (2).

## Revendications

1. Détecteur d'accélération ou de décélération (1, 1′) comprenant un boîtier, qui comporte plusieurs évidements en forme de tunnel (3, 3′, 4, 4′) parallèles les uns aux autres, un commutateur à contacts scellés (17, 17′) étant agencé dans au moins un évidement, et deux aimants permanents (5, 5′, 6, 6′) en forme de tige étant agencés dans au moins un autre évidement l'un derrière l'autre dans la direction de leurs axes longitudinaux, dans lequel :
- deux pôles de même désignation des aimants permanents se font face,
- l'un au moins des aimants permanents (6, 6′) est susceptible d'être déplacé dans la direction longitudinale, et
- le ou les commutateurs à contacts scellés (17, 17′) sont actionnés lors du déplacement du ou des aimants permanents par leur champ magnétique,
caractérisé en ce que :
- les évidements (3, 3′) pour la réception des commutateurs à contacts scellés sont équipés chacun d'un couvercle (7, 7′) qui peut être enlevé ou ouvert transversalement à l'axe longitudinal (21) de l'évidement (3, 3′); et
- les évidements (4, 4′) pour la réception des aimants permanents mobiles (6, 6′) sont refermés à leur face d'extrémité extérieure (9, 9′) par une vis de réglage (10, 10′).

2. Détecteur selon la revendication 1, caractérisé en ce que le couvercle (7) est un couvercle basculant, qui est relié au boîtier (2) par une ou plusieurs charnières à bande (8).

3. Détecteur selon l'une ou l'autre des revendications 1 et 2, caractérisé en ce que l'évidement (4) pour la réception des aimants permanents (5, 6) est subdivisé par un rétrécissement (11) en deux chambres partielles (12, 13) situées l'une derrière l'autre, dans chacune desquelles est agencé l'un des deux aimants permanents (5, 6).

4. Détecteur selon la revendication 3, caractérisé en ce que le rétrécissement (11) est une cloison intermédiaire.

5. Détecteur selon l'une ou l'autre des revendications 3 et 4, caractérisé en ce que la chambre partielle (12) pour la réception de l'aimant mobile (6) est remplie d'un liquide amortisseur (20), et en ce qu'entre la surface enveloppe (14) de l'aimant permanent mobile (6) et la surface intérieure (15) de la chambre partielle (12) est ménagée une fente (16) pour le passage du liquide d'amortissement (20).

6. Détecteur selon l'une des revendications 3, 4 ou 5, caractérisé en ce que la surface (14) de l'aimant permanent mobile (6) est lissée ou polie.

7. Détecteur selon l'une quelconque des revendications précédentes, caractérisé en ce qu'il est ménagé plus de deux évidements parallèles l'un à l'autre (3) pour plusieurs commutateurs à contacts scellés (17), ainsi que le cas échéant également pour plus de deux paires d'aimants permanents (5, 6), dans un boîtier unique (2).
